(19) Europäisches Patentamt
European Patent Office
Office européen des brevets

(11) **EP 3 879 415 A1**

(12) **EUROPEAN PATENT APPLICATION**
published in accordance with Art. 153(4) EPC

(43) Date of publication:
**15.09.2021 Bulletin 2021/37**

(51) Int Cl.:
*G06F 16/9537* (2019.01)   *G06F 16/953* (2019.01)
*G06F 16/9535* (2019.01)

(21) Application number: **20894907.3**

(22) Date of filing: **24.09.2020**

(86) International application number:
**PCT/CN2020/117560**

(87) International publication number:
**WO 2021/139221 (15.07.2021 Gazette 2021/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.01.2020 CN 202010011220**

(71) Applicant: **Baidu Online Network Technology
(Beijing) Co., Ltd
Beijing 100085 (CN)**

(72) Inventors:
• **LI, Ying
  Beijing 100085 (CN)**
• **HUANG, Jizhou
  Beijing 100085 (CN)**
• **FAN, Miao
  Beijing 100085 (CN)**
• **WANG, Haifeng
  Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD AND APPARATUS FOR QUERY AUTO-COMPLETION, DEVICE AND COMPUTER STORAGE MEDIUM**

(57)     The present application discloses a query auto-completion method and apparatus, a device and a computer storage medium, which relates to the technical field of intelligent search. An implementation includes: acquiring a query prefix input by a user currently, and determining candidate Points of Interest (POIs) corresponding to the query prefix; acquiring vector representation of spatial-temporal features of each candidate POI; inputting the vector representation of the spatial-temporal features of each candidate POI into a pre-trained ranking model, so as to obtain a score of each candidate POI; and determining query completion suggestions recommended to the user according to the scores of respective candidate POIs; wherein the spatial-temporal features include at least one of a query time feature and a distance feature between each candidate POI and the user. With the present application, a retrieval intention of the user may be better completed, and practical requirements of the user are met.

Acquire a query prefix input by a user currently, and determine candidate POIs corresponding to the query prefix — 301

Acquire vector representation of spatial-temporal features of each candidate POI — 302

Input the vector representation of the spatial-temporal features of each candidate POI into a pre-trained ranking model, so as to obtain a score of each candidate POI — 303

Determine query completion suggestions recommended to the user according to the scores of respective candidate POIs — 304

Fig.3

## Description

The present application claims priority to Chinese Patent Application No.202010011220X, entitled "Query Auto-Completion Method and Apparatus, Device and Computer Storage Medium", filed on January 06, 2020.

## Field of the Disclosure

The present application relates to the technical field of computer applications, and particularly to a query auto-completion method and apparatus, a device and a computer storage medium in the technical field of intelligent search.

## Background of the Disclosure

Currently, Query Auto-Completion (QAC) is widely used by mainstream general search engines and vertical search engines. For example, in a map application, when a user inputs a query to search for a certain Point of Interest (POI), starting from the user inputting an incomplete query (which is referred to as a query prefix in the present application), a search engine may recommend a series of candidate POIs to the user in real time in a candidate list for the user to select as a completion result of the query (queries recommended in the candidate list are referred to as query completion suggestions in the present application). Once the user finds an intended POI in the candidate list, the query may be completed by selecting this POI from the candidate list, thereby initiating a search for this POI.

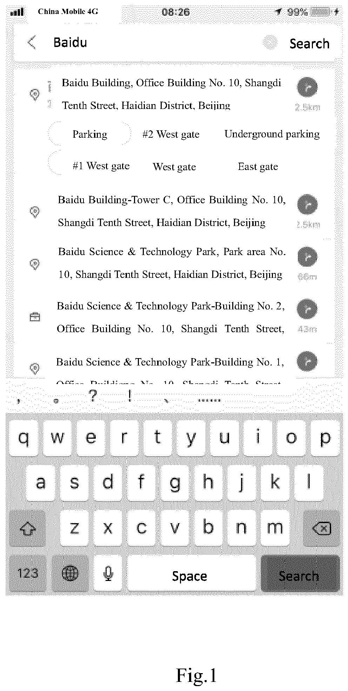

For example, as shown in Fig. 1, when the user inputs a query prefix "Baidu" in a search box of the map application, candidate POIs, such as "Baidu Building", "Baidu Building- Tower C", "Baidu Science & Technology Park", or the like, may be recommended to the user in the form of a candidate list for the user to select, and once the user selects "Baidu Building" therefrom, the query is completed, and a search for "Baidu Building" is initiated.

However, in the existing query auto-completion scheme, the suggestions provided for the same query prefixes are all the same, for example, all the suggestions are ranked in the candidate list based on the search popularity of each POI, and practical requirements of the user are unable

## Summary of the Disclosure

In view of this, the present application provides a query auto-completion method and apparatus, a device and a computer storage medium, such that recommended query completion suggestions better meet practical requirements of a user.

In a first aspect, the present application provides a query auto-completion method, including:

acquiring a query prefix input by a user currently, and determining candidate Points of Interest (POIs) corresponding to the query prefix;
acquiring vector representation of spatial-temporal features of each candidate POI;
inputting the vector representation of the spatial-temporal features of each candidate POI into a pre-trained ranking model, so as to obtain a score of each candidate POI; and
determining query completion suggestions recommended to the user according to the scores of respective candidate POIs;
wherein the spatial-temporal features include at least one of a query time feature and a distance feature between each candidate POI and the user.

According to a preferred implementation of the present application, the vector representation of the query time feature of each candidate POI is determined by:

mapping the condition that the current time falls into M preset time intervals to an M-dimensional vector space, so as to obtain the vector representation of the query time feature corresponding to the candidate POI, M being a positive integer greater than 1; or
inquiring temporal popularity distribution of the category of the candidate POI according to the current time, and mapping the inquired popularity condition of the current time to an M-dimensional vector space, so as to obtain the vector representation of the query time feature of the candidate POI; the temporal popularity distribution of each POI category being predetermined by:
counting the times that the inquired or clicked time of each POI category falls into the M preset time intervals respectively, so as to obtain the temporal popularity distribution corresponding to each POI category.

According to a preferred implementation of the present application, the vector representation of the distance feature between each candidate POI and the user is determined by:

determining the distance between the candidate POI and the user, and mapping the condition that the distance falls into N preset distance intervals to an N-dimensional vector space, so as to obtain the vector representation of the distance feature corresponding to the candidate POI, N being a positive integer greater than 1; or inquiring spatial popularity distribution of the category of the candidate POI according to the distance between the candidate POI and the user, and mapping the inquired popularity condition of the distance to an N-dimensional vector space, so as to obtain the vector representation of the distance feature of the candidate POI; the spatial popularity distribution of each POI category is predetermined by:
counting the times that the distance between each POI category and the user when the POI category is inquired or clicked falls into the preset N distance intervals respectively, so as to obtain the spatial popularity distribution corresponding to each POI category.

According to a preferred implementation of the present application, vector representation of attribute features of the user and vector representation of popularity features of each candidate POI are further used when each candidate POI is scored by the ranking model.

In a second aspect, the present application provides a method for training a ranking model for query auto-completion, including:

acquiring sample data from a POI query log, wherein the sample data includes a query prefix input when a user selects a POI from query completion suggestions, POIs in the query completion suggestions corresponding to the query prefix and the POI selected by the user in the query completion suggestions; and training a neural network model by taking vector representation of spatial-temporal features of the POI selected by the user in the query completion suggestions as a positive example and vector representation of spatial-temporal features of the POIs not selected by the user as negative examples, so as to obtain the ranking model, with a training target of maximizing the difference between the scores of the positive and negative example POIs by the neural network model;
wherein the spatial-temporal features include at least one of a query time feature and a distance feature between each POI and the user.

According to a preferred implementation of the present application, the vector representation of the query time feature of each POI in the query completion suggestions is determined by:

mapping the condition that the time when the user selects the POI from the query completion suggestions falls into M preset time intervals to an M-dimensional vector space, so as to obtain the vector representation of the query time feature corresponding to each POI, M being a positive integer greater than 1; or determining the time when the user selects the POI from the query completion suggestions, inquiring temporal popularity distribution of the category of each POI according to the time, and mapping the inquired popularity condition of the time to an M-dimensional vector space, so as to obtain the vector representation of the query time feature corresponding to each POI; the temporal popularity distribution of each POI category is predetermined by:
counting the times that the inquired or clicked time of each POI category falls into the M preset time intervals respectively, so as to obtain the temporal popularity distribution corresponding to each POI category.

According to a preferred implementation of the present application, the vector representation of the distance feature of each POI in the query completion suggestions and the user is determined by:

mapping the condition that the distance between the POI in the query completion suggestions and the user falls into N preset distance intervals to an N-dimensional vector space, so as to obtain the vector representation of the distance feature corresponding to the POI, N being a positive integer greater than 1; or inquiring spatial popularity distribution of the category of the POI according to the distance between the POI in the query completion suggestions and the user, and mapping the inquired popularity condition of the distance to an N-dimensional vector space, so as to obtain the vector representation of the distance feature corresponding to the POI; the spatial popularity distribution of each POI category is predetermined by:
counting the times that the distance between each POI category and the user when the POI category is inquired or clicked falls into the preset N distance intervals respectively, so as to obtain the spatial popularity distribution corresponding to each POI category.

According to a preferred implementation of the present application, the positive example further includes vector representation of attribute features of the user and vector representation of popularity features of the POI selected by the user; and

the negative example further includes the vector representation of the attribute features of the user and vector representation of popularity features of the POIs not selected by the user.

In a third aspect, the present application further provides a query auto-completion apparatus, including:

a first acquiring unit configured to acquire a query prefix input by a user currently, and determine candidate Points of Interest (POIs) corresponding to the query prefix;

a second acquiring unit configured to acquire vector representation of spatial-temporal features of each candidate POI;

a scoring unit configured to input the vector representation of the spatial-temporal features of each candidate POI into a pre-trained ranking model, so as to obtain a score of each candidate POI; and

a query completion unit configured to determine query completion suggestions recommended to the user according to the scores of respective candidate POIs;

wherein the spatial-temporal features include at least one of a query time feature and a distance feature between each candidate POI and the user.

In a fourth aspect, the present application provides an apparatus for building a ranking model for query auto-completion, including:

a first acquiring unit configured to acquire sample data from a POI query log, wherein the sample data includes a query prefix input when a user selects a POI from query completion suggestions, POIs in the query completion suggestions corresponding to the query prefix and the POI selected by the user in the query completion suggestions;

a second acquiring unit configured to acquire vector representation of spatial-temporal features of each POI in the query completion suggestions; and

a model training unit configured to train a neural network model by taking vector representation of spatial-temporal features of the POI selected by the user in the query completion suggestions as a positive example and vector representation of spatial-temporal features of the POIs not selected by the user as negative examples, so as to obtain the ranking model, with a training target of maximizing the difference between the scores of the positive and negative example POIs by the neural network model;

wherein the spatial-temporal features include at least one of a query time feature and a distance feature between each POI and the user.

In a fifth aspect, the present application provides an electronic device, including:

at least one processor;

a memory connected with the at least one processor communicatively;

wherein the memory stores instructions executable by the at least one processor to enable the at least one processor to perform the method as mentioned above.

In a sixth aspect, the present application provides a non-transitory computer readable storage medium with computer instructions stored thereon, wherein the computer instructions are used for causing a computer to perform the methods as mentioned above.

According to the above technical solution of the present application, the personalized spatial-temporal features of the POIs are merged into the ranking model, and the user and the candidate POIs may be matched in the spatial-temporal features, thereby better completing a retrieval intention of the user, and meeting the practical requirements of the user.

Other effects of the above-mentioned alternatives will be described below in conjunction with embodiments.

**Brief Description of Drawings**

The drawings are used for better understanding the present solution and do not constitute a limitation of the present application. In the drawings:

Fig. 1 is an exemplary diagram of a query auto-completion interface;

Fig. 2 shows an exemplary system architecture to which embodiments of the present disclosure may be applied;

Fig. 3 is a flow chart of a query auto-completion method according to a first embodiment of the present application;

Fig. 4 is a schematic processing diagram of the method according to the embodiment of the present application;

Fig. 5 is a flow chart of a method for building a ranking model according to a second embodiment of the present application;

Fig. 6 is a structural diagram of a query auto-completion apparatus according to a third embodiment of the present application;

Fig. 7 is a structural diagram of an apparatus for building a ranking model according to an embodiment of the present application; and

Fig. 8 is a block diagram of an electronic device configured to implement the methods according to the embodiments of the present application.

**Detailed Description of Preferred Embodiments**

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

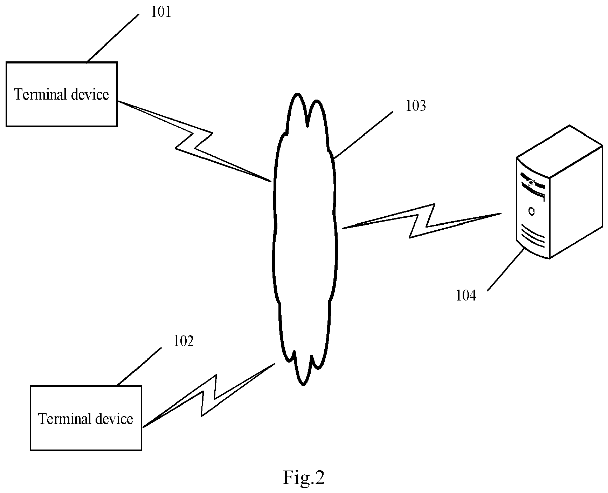

Fig. 2 shows an exemplary system architecture to which the embodiment of the present disclosure may be applied. As shown in Fig. 2, the system architecture may include terminal devices 101, 102, a network 103 and a server 104. The network 103 serves as a medium for providing communication links between the terminal devices 101, 102 and the server 104. The network 103 may include various connection types, such as wired and wireless communication links, or fiber-optic cables, or the like.

Users may use the terminal devices 101, 102 to interact with the server 104 through the network 103. Various applications, such as a voice interaction application, a web browser application, a communication application, or the like, may be installed on the terminal devices 101, 102.

The terminal devices 101, 102 may be configured as various electronic devices, including, but not limited to, smart phones, PCs, smart televisions, or the like. A query auto-completion apparatus according to the present disclosure may be provided and run on the server 104. The apparatus may be implemented as a plurality of pieces of software or software modules (for example, for providing distributed service), or a single piece of software or software module, which is not limited specifically herein.

For example, when a user inputs a query prefix on a retrieval interface provided by a browser or a client on the terminal device 101, the browser or the client provides the query prefix to the server 104 in real time, and the server returns query completion suggestions corresponding to the query prefix currently input by the user to the terminal device 101 with a method according to the present application. If the user finds a wanted POI from the query completion suggestions, a search for this POI may be initiated by selecting the POI. If the user does not find the wanted POI from the query completion suggestions, an input operation may continue, the browser or the client then provides the query prefix for the server 104 in real time, and the server 104 returns the query completion suggestions corresponding to the query prefix input by the user, thereby achieving an effect that in the process of inputting a query by the user, the query completion suggestions are recommended to the user in real time along with the query prefix input by the user.

The server 104 may be configured as a single server or a server group including a plurality of servers. It should be understood that the numbers of the terminal devices, the network, and the server in Fig. 2 are merely schematic. There may be any number of terminal devices, networks and servers as desired for an implementation.

The technical essence of the present application lies in establishing the association between the user and the POI, and may have a use scenario that when the user uses map data to search for the POI, the query completion suggestions are recommended to the user in real time along with the query prefix input by the user. The query completion suggestions are obtained by ranking candidate POIs with a ranking model after determination of the candidate POIs corresponding to the query prefix input by the user.

In the prior art, the ranking operation for each candidate POI usually takes into account popularity features of each candidate POI, and in some cases, also takes into account some user attribute features. However, this ranking way is unable to meet actual demands of the user well. By statistics using data of real POI retrieval of the user in large-scale map data, certain temporal and spatial characteristics are found to exist when the user inquires the POI. For example, the user usually inquires some office POIs, such as "Baidu Building", "Zhongguancun Science & Technology Park", or the like, on weekdays, and inquires some scenic area POIs, such as "Badaling great wall", "Beijing zoo", or the like, on holidays. As another example, when the user inquires "Badaling great wall", there usually exists a large distance from the POI, and when the user inquires the office POI, such as "Baidu Building", there usually exists a small distance. Based on the this, the present application has a core concept that personalized spatial-temporal features of the POIs are merged into the ranking model, such that the user and the candidate POIs may be rapidly matched in the spatial-temporal features, thus better completing a retrieval intention of the user. Methods according to the present application will be described below in detail in conjunction with embodiments.

First Embodiment

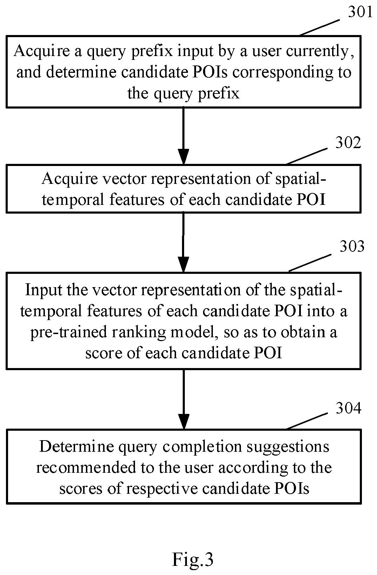

Fig. 3 is a flow chart of a query completion method according to a first embodiment of the present application, and as shown in Fig. 3, the method may include the following steps:
301: acquiring a query prefix input by a user currently, and determining candidate POIs corresponding to the query prefix.

The method is suitable for various types of input contents, such as Chinese characters, pinyin, initials, or the like, but the input query prefix may be regarded as a character string. As the user inputs the query prefix, the query prefix input by the user currently is acquired in real time. For example, in the process of inputting "Baidu Building" by the user, the user may input a plurality of query prefixes, such as "Bai", "Baidu" and "Baidu Build", and the method according to the present application is executed for each query prefix. That is, when the user inputs "Bai", the currently input query prefix is "Bai", and the method according to the present application is executed for the query prefix to recommend query completion suggestions to the user. When the user inputs "Baidu", the currently input query prefix is "Baidu", and the method according to the present application is executed for the query prefix to recommend query completion suggestions to the user. When the user inputs "Baidu Build", the currently input query prefix is "Baidu Build", and the method according to the present application is executed for the query prefix to recommend query completion suggestions to the user.

The manner for determining the candidate POIs corresponding to the currently input query prefix may adopt an existing implementation manner, and aims to find POIs strongly related to the query prefix, or find POIs with the query prefix as the beginning of texts. For example, a reverse index may be established in advance for POIs in a POI library with various corresponding query prefixes. When the user inputs a query, the POI library is queried according to the query prefix input currently, and all hit POIs serve as the candidate POIs.

302: acquiring vector representation of spatial-temporal features of each candidate POI.

The spatial-temporal features of each candidate POI in the embodiment of the present application may include at least one of a query time feature and a distance feature between each candidate POI and the user.

Query time refers to current query time of the user, and is subsequently referred to as current time for short. That is, the query time is integrated into feature representation of the POI. The distance feature between each candidate POI and the user refers to the distance between the candidate POI and the current position of the user; and that is, the position feature of the POI is merged into feature representation of the POI.

The vector representation of the query time feature of each candidate POI may be determined by, but not limited to, the following two ways:

First way: mapping the condition that the current time falls into M preset time intervals to an M-dimensional vector space, so as to obtain a vector of the query time feature corresponding to the candidate POI, M being a positive integer greater than 1.

M time intervals may be obtained by pre-division, for example, 24 hours in a day are divided into 4 time periods, 7 days in a week are divided into 28 time intervals, and at this point, M is 28. The 7 days are divided into:

time interval 1: 0:00 to 6:00 on Monday;
time interval 2: 6:00 to 12:00 on Monday;
time interval 3: 12:00 to 18:00 on Monday;
time interval 4: 18:00 to 24:00 on Monday;
......
time interval 5: 0:00 to 6:00 on Tuesday;
time interval 28: 18:00 to 24:00 on Sunday.

If the current query time of the user is 7:00 a.m. on Monday, the current query time falls into the time interval 2, a 28-dimensional vector is obtained after mapping to a 28-dimensional vector space, and is used as the vector representation of the query time feature of the candidate POI, for example, the corresponding position of the time interval 2 in the vector has a value 1, and other positions have values 0.

Second way: inquiring temporal popularity distribution of the category of the candidate POI according to the current time, and mapping the inquired popularity condition of the current time to an M-dimensional vector space, so as to obtain a vector of the query time feature of the candidate POI.

Generally, the POIs in the same category show similar temporal characteristics, for example, scenic area POIs are usually more queried on holidays, while office POIs are usually more queried on weekdays. Therefore, in the process of training a ranking model, in order to reduce the data amount in the model training process and embody the overall temporal characteristic of one category, statistics may be performed on the temporal popularity distribution of each POI category in advance, for example, the times that the inquired or clicked time of each POI category falls into the M preset time intervals are counted to obtain the temporal popularity distribution corresponding to each POI category. Correspondingly, in this step, after the temporal popularity distribution of the category of the candidate POI is inquired according to the current time, the inquired popularity condition of the current time may be mapped to the M-dimensional vector space.

Similar to the first way, 28 time intervals may also be obtained by pre-division, the inquired or clicked time of each POI category is then obtained from POI query logs of mass users, the times that each time falls into M time intervals are counted, and then, the numbers of the times may be further normalized to obtain the temporal popularity distribution. The temporal popularity distribution reflects the popularity of inquiring or clicking POIs of a certain category in each time interval.

For example, assuming that a certain candidate POI is an office POI, and the current query time of the user is 7:00 am on Monday, the temporal popularity distribution of the office POI is queried to obtain a popularity value 0.7 corresponding to 7:00 a.m. on Monday, the value is mapped to the 28-dimensional vector space, and the obtained vector is the vector representation of the query time feature corresponding to the candidate POI.

Similarly, the vector representation of the distance feature between each candidate POI and the user may be determined by, but not limited to, the following two ways:

First way: determining the distance between the candidate POI and the user, and mapping the condition that the distance falls into N preset distance intervals to an N-dimensional vector space, so as to obtain a vector of the distance feature corresponding to the candidate POI, N being a positive integer greater than 1.

N distance intervals may be obtained by pre-division, for example, 11 distance intervals are set:

distance interval 1: 0-5km;
distance interval 2: 5-10km;
......
distance interval 10: 45-50km;
distance interval 11: more than 50km.

If the distance between a certain candidate POI and the current position of the user is 6.5km, the distance falls into the distance interval 2, and an 11-dimensional vector is obtained after mapping to an 11-dimensional vector space and is used as the vector representation of the distance feature between the candidate POI and the user. For example, the corresponding position of the distance interval 2 in the vector has a value 1, and the other positions have values 0.

Second way: inquiring spatial popularity distribution of the category of the candidate POI according to the distance between the candidate POI and the user, and mapping the inquired popularity condition of the distance to an N-dimensional vector space, so as to obtain a vector of the distance feature of the candidate POI.

Generally, the POIs in the same category show similar spatial characteristics, for example, the scenic area POIs are usually more queried by further users, while the office POIs are usually more queried by closer users. Therefore, in the process of training the ranking model, in order to reduce the data amount in the model training process, statistics may be performed on the spatial popularity distribution of each POI category in advance, for example, the times that the distance between each POI category and the user when the POI category is inquired or clicked falls into the preset N distance intervals respectively is counted to obtain the spatial popularity distribution corresponding to each POI category. Correspondingly, in this step, after the spatial popularity distribution of the category of the candidate POI is inquired according to the distance between the candidate POI and the user, the inquired popularity condition of the distance may be mapped to the N-dimensional vector space.

Similar to the first way, 11 distance intervals may also be obtained by pre-division, the distance between each POI category and the user when the POI category is inquired or clicked is then obtained from the POI query logs of mass users, the times that each distance falls into N distance intervals are counted, and then, the numbers of the times may be further normalized to obtain the spatial popularity distribution. The spatial popularity distribution reflects the popularity of inquiring or clicking POIs of a certain category in each distance interval.

For example, assuming that a certain candidate POI is a scenic area POI, and the distance between the candidate POI and the querying user is 46km and falls into the distance interval 10, the spatial popularity distribution of the scenic area POI is queried to obtain a popularity value 0.8 corresponding to 46km, the value is mapped to the 11-dimensional vector space, and the obtained vector is the vector representation of the distance feature corresponding to the candidate POI.

303: inputting the vector representation of the spatial-temporal features of each candidate POI into the pre-trained ranking model, so as to obtain a score of each candidate POI.

Vector representation of attribute features of the user and vector representation of popularity features of each candidate POI may be further used when each candidate POI is scored by the ranking model. That is, input to the ranking model includes the feature representation of the attribute features of the user, the vector representation of the popularity features of each candidate POI, and the vector representation of the spatial-temporal features of each candidate POI, and output of the ranking model is the score for each candidate POI. The ranking model may be configured as a neural network model, and the training process thereof will be described in detail in the second embodiment.

The attribute features of the user may include information, such as the user's age, gender, job, income level, city, etc., and the vector representation of the attribute features of the user may be obtained by encoding the information. The popularity features of the candidate POI may be characterized by information, such as click frequency, retrieval frequency, navigation frequency, or the like, of the candidate POI, and the vector representation of the popularity features of the candidate POI may be obtained by encoding the information. Specifically, encoding methods are not repeated and may adopt the prior art.

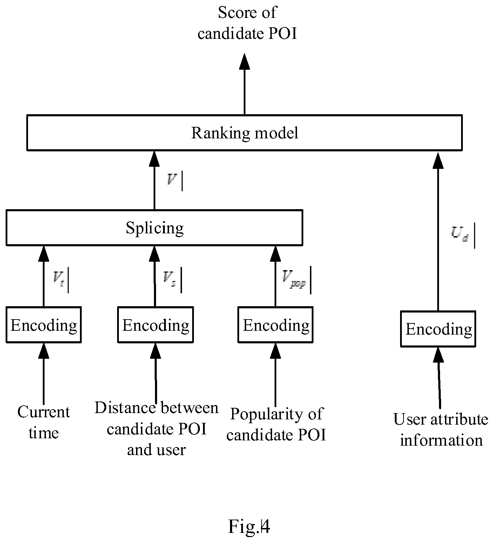

In the embodiment of the present application, $V_t$ is taken as the vector representation of the query time feature of the candidate POI, $V_s$ is taken as the vector representation of the distance between the candidate POI and the user, $U_d$ is taken as the vector representation of the attribute feature of the user, $V_{pop}$ is taken as the vector representation of the popularity feature of the candidate POI, and the above-mentioned whole process may be shown in Fig. 4. As one implementation, the vector representation of the query time feature, the vector representation of the distance, and the vector representation of the popularity feature of each candidate POI may be spliced to obtain the overall vector representation $V$ of the candidate POI. In the ranking model, $U_d$ and $V$ are transformed by a neural network to obtain the score of the candidate POI.

304: determining query completion suggestions recommended to the user according to the scores of respective candidate POIs.

In this step, the candidate POIs with score values greater than or equal to a preset score threshold may be used as the query completion suggestions, or the POIs with top P score values may be used as the query completion suggestions, and so on, and P is a preset positive integer. When the query completion suggestions are recommended to the user, the POIs are ranked in a candidate list according to the scores thereof. An existing drop-down box near the search box or other forms may be adopted as the recommendation way.

By the manner in the present embodiment, when the user inputs the query prefix "ba" (Chinese pinyin) on weekdays, the candidate POIs, such as "Baidu Building", "Baidu Science & Technology Park", or the like, as office POIs are ranked higher in the query auto-completion suggestions, and the candidate POIs, such as "Badaling great wall", or the like, as scenic area POIs are ranked lower in the query auto-completion suggestions. When the user inputs the same query prefix "ba" on holidays, the candidate POIs, such as "Badaling great wall", or the like, as scenic area POIs are ranked higher in the query auto-completion suggestions, and the candidate POIs, such as "Baidu Building", "Baidu Science & Technology Park", or the like, as office POIs are ranked lower in the query auto-completion suggestions. In addition, when the user inputs the query prefix "ba" (Chinese pinyin), if there exists a nearby office POI in the candidate POIs hit by the query prefix, for example, "Baidu Building" several kilometers away from the user, this candidate POI is ranked higher in the query auto-completion suggestions, and if there exists no office POI nearby and there exists the scenic area POI "Badaling great wall" at 45 kilometers, since "Badaling great wall" has a highest query or click rate in the distance interval of 45km, "Badaling great wall" is ranked higher in the query auto-completion suggestions.

Second Embodiment

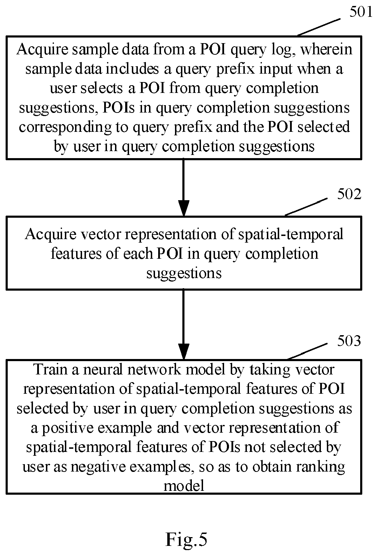

Fig. 5 is a flow chart of a method for building a ranking model according to a second embodiment of the present application, and as shown in Fig. 5, the method may include the following steps:
501: acquiring sample data from a POI query log, wherein the sample data includes a query prefix input when a user selects a POI from query completion suggestions, POIs in the query completion suggestions corresponding to the query prefix and the POI selected by the user in the query completion suggestions.

For example, in the process of inputting characters one by one to form the query prefixes, when inputting "Baidu Build", the user user A clicks the POI "Baidu Building- Tower A" from the query completion suggestions, user identification user_A, the query prefix "Baidu Build", each POI in the corresponding query completion suggestions, and the POI "Baidu Building-Tower A" selected by the user are acquired as one piece of data. In the same way, a plurality of pieces of data may be obtained from POI query logs of mass users for training the ranking model.

502: acquiring vector representation of spatial-temporal features of each POI in the query completion suggestions.

The spatial-temporal features of each candidate POI in the present embodiment may include at least one of a query time feature and a distance feature between each POI and the user.

Query time may be the time when the user selects the POI from the query completion suggestions. The distance between each POI and the user may be the distance between the POI in the query completion suggestions and the corresponding user.

The vector representation of the query time feature of each POI in the query completion suggestions may be determined by, but not limited to, the following two ways:

First way: mapping the condition that the time when the user selects the POI from the query completion suggestions falls into M preset time intervals to an M-dimensional vector space, so as to obtain a vector of the query time feature corresponding to each POI, M being a positive integer greater than 1.

Second way: determining the time when the user selects the POI from the query completion suggestions, inquiring temporal popularity distribution of the category of each POI according to the time, and mapping the inquired popularity condition of the time to an M-dimensional vector space, so as to obtain a vector of the query time feature corresponding to each POI.

The times that the inquired or clicked time of each POI category falls into the M preset time intervals respectively may be pre-counted, so as to obtain the temporal popularity distribution corresponding to each POI category.

For the implementation of the above-mentioned two ways, reference may be made to the relevant description in the step 302 in the first embodiment, and the description is not repeated herein.

The vector representation of the distance feature between each POI in the query completion suggestions and the user may be determined by, but not limited to, the following two ways:

First way: mapping the condition that the distance between the POI in the query completion suggestions and the user falls into N preset distance intervals to an N-dimensional vector space, so as to obtain a vector of the distance feature corresponding to the POI, N being a positive integer greater than 1.

Second way: inquiring spatial popularity distribution of the category of the POI according to the distance between the POI in the query completion suggestions and the user, and mapping the inquired popularity condition of the distance to an N-dimensional vector space, so as to obtain a vector of the distance feature corresponding to the POI.

The times that the distance between each POI category and the user when the POI category is inquired or clicked falls into the preset N distance intervals respectively may be counted to obtain the spatial popularity distribution corresponding to each POI category.

For the implementation of the above-mentioned two ways, reference may be made to the relevant description in the step 302 in the first embodiment, and the description is not repeated herein.

503: training a neural network model by taking vector representation of spatial-temporal features of the POI selected by the user in the query completion suggestions as a positive example and vector representation of spatial-temporal features of the POIs not selected by the user as negative examples, so as to obtain the ranking model.

The ranking model may be trained pairwise. Further, the above-mentioned positive example may further include vector representation of attribute features of the user and vector representation of popularity features of the POI selected by the user; and the negative example further includes the vector representation of the attribute features of the user and vector representation of popularity features of the POIs not selected by the user.

The processing process is similar to Fig. 4. That is, the positive example includes: the vector representation of the query time feature of the POI selected by the user in the query completion suggestions (corresponding to $V_t$ in Fig. 4), the vector representation of the distance from the user (corresponding to $V_s$ in Fig. 4), the vector representation of the popularity feature (corresponding to $V_{pop}$ in Fig. 4), and the vector representation of the attribute feature of the user (corresponding to $U_d$ in Fig. 4). The negative example includes: the vector representation of the query time feature of the POI not selected by the user in the query completion suggestions (corresponding to $V_t$ in Fig. 4), the vector representation of the distance from the user (corresponding to $V_s$ in Fig. 4), the vector representation of the popularity feature (corresponding to $V_{pop}$ in Fig. 4), and the vector representation of the attribute feature of the user (corresponding to $U_d$ in Fig. 4).

The input vector representation is spliced and transformed by the ranking model to obtain the scores of the positive and negative example POIs, and parameters of the ranking model are updated according to the obtained scores of the positive and negative example POIs until a training target is reached. The training target may be to maximize the difference between the scores of the positive and negative example POIs by the neural network model.

Specifically, the above-mentioned training target may be embodied as minimizing the loss $L_\Delta$ of the neural network model, for example, the following formula may be adopted:

$$L_\Delta = \sum_{i=1}^{m} \sum_{j=1}^{n} (\max\{0, \quad \tau + h(u^{(i)}, v^{(i,k^{(i)})}) - h(u^{(i)}, v^{(i,j)})\})^2$$

wherein $\tau$ is a hyper-parameter. One piece of training data ($i$th piece of training data) may be represented as: ($u^{(i)}$, $\{v^{(i,1)}, ..., v^{(i,j)},... v^{(i,n)}\}$, $k^{(i)}$), and $m$ is the number of pieces of the training data. u is the vector representation of the user, and is $U_d$ of the user in the embodiment of the present application, $\{v^{(i,1)}, ..., v^{(i,j)},... v^{(i,n)}\}$ is a set formed by the POIs in the query completion suggestions, and $k^{(i)}$ is the POI selected by the user in the query completion suggestions. In the embodiment of the present application, the vector v may be obtained by splicing $V_{pop}$, $V_t$ and $V_s$. $(u^{(i)}, v^{(i,k(i))})$ serves as the positive example, $(u^{(i)}, v^{(i,j)})$ serves as the negative example, and $j{\neq}k^{(i)}$. h() is a function used by the ranking model to score the POI, and contains model parameters required to be updated in the training process of the ranking model.

The method according to the present application is described above in detail, and an apparatus according to the present application will be described below in detail in conjunction with an embodiment.

Third Embodiment

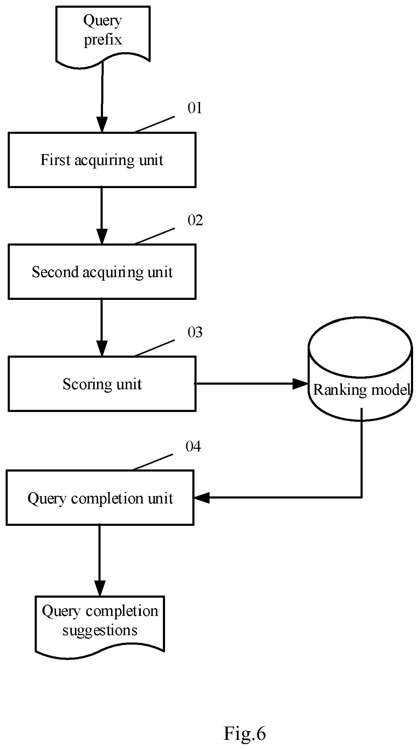

Fig. 6 is a structural diagram of a query auto-completion apparatus according to a third embodiment of the present application, and as shown in Fig. 6, the apparatus may include a first acquiring unit 01, a second acquiring unit 02, a scoring unit 03 and a query completion unit 04. The main functions of each constitutional unit are as follows.

The first acquiring unit 01 is configured to acquire a query prefix input by a user currently, and determine candidate POIs corresponding to the query prefix.

The manner for determining the candidate POIs corresponding to the currently input query prefix may adopt an existing implementation manner, and aims to find POIs strongly related to the query prefix, or find POIs with the query prefix as the beginning of texts. For example, a reverse index may be established in advance for POIs in a POI library with various corresponding query prefixes. When the user inputs a query, the POI library is queried according to the query prefix input currently, and all hit POIs serve as the candidate POIs.

The second acquiring unit 02 is configured to acquire vector representation of spatial-temporal features of each candidate POI. The spatial-temporal features include at least one of a query time feature and a distance feature between each candidate POI and the user.

Specifically, the second acquiring unit 02 may map the condition that the current time falls into M preset time intervals to an M-dimensional vector space, so as to obtain the vector representation of the query time feature corresponding to the candidate POI, M being a positive integer greater than 1; or inquire temporal popularity distribution of the category of the candidate POI according to the current time, and map the inquired popularity condition of the current time to an M-dimensional vector space, so as to obtain the vector representation of the query time feature of the candidate POI; the temporal popularity distribution of each POI category being predetermined by: counting the times that the inquired or clicked time of each POI category falls into the M preset time intervals respectively, so as to obtain the temporal popularity distribution corresponding to each POI category.

The second acquiring unit 02 may determine the distance between the candidate POI and the user, and map the condition that the distance falls into N preset distance intervals to an N-dimensional vector space, so as to obtain the vector representation of the distance feature corresponding to the candidate POI, N being a positive integer greater than 1; or inquire spatial popularity distribution of the category of the candidate POI according to the distance between the candidate POI and the user, and map the inquired popularity condition of the distance to an N-dimensional vector space, so as to obtain the vector representation of the distance feature of the candidate POI; the spatial popularity distribution of each POI category is predetermined by: counting the times that the distance between each POI category and the user when the POI category is inquired or clicked falls into the preset N distance intervals respectively, so as to obtain the spatial popularity distribution corresponding to each POI category.

The scoring unit 03 is configured to input the vector representation of the spatial-temporal features of each candidate POI into a pre-trained ranking model, so as to obtain a score of each candidate POI. Further, the scoring unit 03 may input vector representation of attribute features of the user and vector representation of popularity features of each candidate POI into the ranking model, such that each candidate POI may be scored by the ranking model. For the specific processing manner, reference may be made to the related description in the first embodiment, and the specific processing manner is not repeated herein.

The query completion unit 04 is configured to determine query completion suggestions recommended to the user according to the scores of respective candidate POIs. For example, the candidate POIs with score values greater than or equal to a preset score threshold may be used as the query completion suggestions, or the POIs with top P score values may be used as the query completion suggestions, and so on, and P is a preset positive integer. When the query completion suggestions are recommended to the user, the POIs are ranked in a candidate list according to the scores thereof. An existing drop-down box near the search box or other forms may be adopted as the recommendation way.

Fourth Embodiment

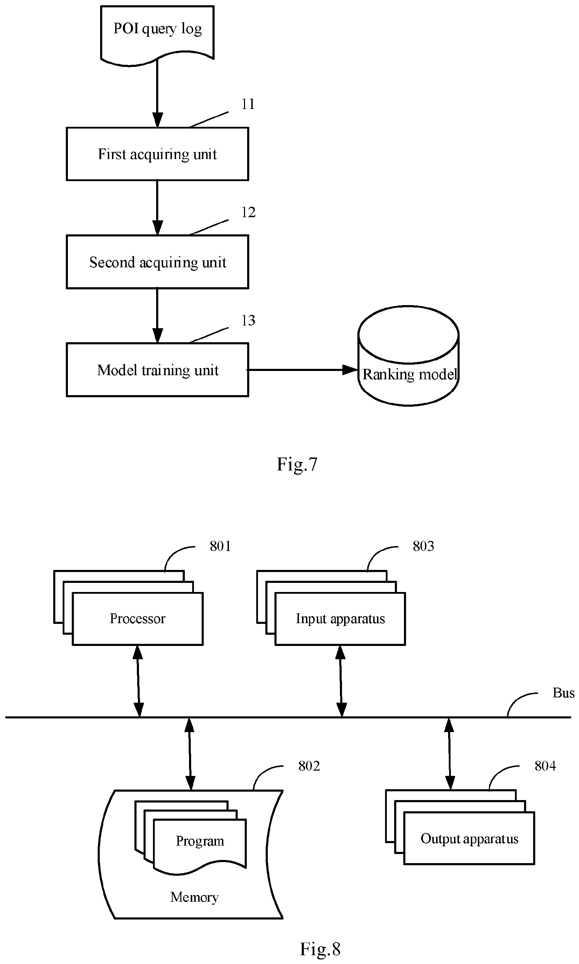

Fig. 7 is a structural diagram of an apparatus for building a ranking model according to an embodiment of the present application, and as shown in Fig. 7, the apparatus may include a first acquiring unit 11, a second acquiring unit 12 and a model training unit 13. The main functions of each constitutional unit are as follows.

The first acquiring unit 11 is configured to acquire sample data from a POI query log, wherein the sample data includes a query prefix input when a user selects a POI from query completion suggestions, POIs in the query completion suggestions corresponding to the query prefix and the POI selected by the user in the query completion suggestions.

The second acquiring unit 12 is configured to acquire vector representation of spatial-temporal features of each POI in the query completion suggestions. The spatial-temporal features include at least one of a query time feature and a distance feature between each POI and the user.

Specifically, the second acquiring unit 12 may map the condition that the distance between the POI in the query completion suggestions and the user falls into N preset distance intervals to an N-dimensional vector space, so as to obtain the vector representation of the distance feature corresponding to the POI, N being a positive integer greater than 1; or
inquire spatial popularity distribution of the category of the POI according to the distance between the POI in the query completion suggestions and the user, and map the inquired popularity condition of the distance to an N-dimensional vector space, so as to obtain the vector representation of the distance feature corresponding to the POI; the spatial popularity distribution of each POI category is predetermined by: counting the times that the distance between each POI category and the user when the POI category is inquired or clicked falls into the preset N distance intervals respectively, so as to obtain the spatial popularity distribution corresponding to each POI category.

The second acquiring unit 12 may map the condition that the time when the user selects the POI from the query completion suggestions falls into M preset time intervals to an M-dimensional vector space, so as to obtain the vector representation of the query time feature corresponding to each POI, M being a positive integer greater than 1; or

determine the time when the user selects the POI from the query completion suggestions, inquire temporal popularity distribution of the category of each POI according to the time, and map the inquired popularity condition of the time to an M-dimensional vector space, so as to obtain the vector representation of the query time feature corresponding to each POI; the temporal popularity distribution of each POI category is predetermined by: counting the times that the inquired or clicked time of each POI category falls into the M preset time intervals respectively, so as to obtain the temporal popularity distribution corresponding to each POI category.

The model training unit 13 is configured to train a neural network model by taking vector representation of spatial-temporal features of the POI selected by the user in the query completion suggestions as a positive example and vector representation of spatial-temporal features of the POIs not selected by the user as negative examples, so as to obtain the ranking model, with a training target of maximizing the difference between the scores of the positive and negative example POIs by the neural network model.

The above-mentioned positive example may further include vector representation of attribute features of the user and vector representation of popularity features of the POI selected by the user; and the negative example may further include the vector representation of the attribute features of the user and vector representation of popularity features of the POIs not selected by the user.

According to the embodiment of the present application, there are also provided an electronic device and a readable storage medium.

Fig. 8 is a block diagram of an electronic device for the query auto-completion method or the method for building a ranking model according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 8, the electronic device includes one or more processors 801, a memory 802, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 8, one processor 801 is taken as an example.

The memory 802 is configured as the non-transitory computer readable storage medium according to the present application. The memory stores instructions executable by the at least one processor to cause the at least one processor to perform a query auto-completion method or a method for building a ranking model according to the present application. The non-transitory computer readable storage medium according to the present application stores computer instructions for causing a computer to perform the query auto-completion method or the method for building a ranking model according to the present application.

The memory 802 which is a non-transitory computer readable storage medium may be configured to store non-transitory software programs, non-transitory computer executable programs and modules, such as program instructions/modules corresponding to the query auto-completion method or the method for building a ranking model according to the embodiments of the present application. The processor 801 executes various functional applications and data processing of a server, that is, implements the query auto-completion method or the method for building a ranking model according to the above-mentioned embodiments, by running the non-transitory software programs, instructions, and modules stored in the memory 802.

The memory 802 may include a program storage area and a data storage area, wherein the program storage area may store an operating system and an application program required for at least one function; the data storage area may store data created according to use of the electronic device, or the like. Furthermore, the memory 802 may include a high-speed random access memory, or a non-transitory memory, such as at least one magnetic disk storage device, a flash memory device, or other non-transitory solid state storage devices. In some embodiments, optionally, the memory 802 may include memories remote from the processor 801, and such remote memories may be connected to the electronic device via a network. Examples of such a network include, but are not limited to, the Internet, intranets, local area networks, mobile communication networks, and combinations thereof.

The electronic device may further include an input apparatus 803 and an output apparatus 804. The processor 801, the memory 802, the input apparatus 803 and the output apparatus 804 may be connected by a bus or other means, and Fig. 8 takes the connection by a bus as an example.

The input apparatus 803 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output apparatus 804 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

**Claims**

1. A query auto-completion method, comprising:

  acquiring a query prefix input by a user currently, and determining candidate Points of Interest (POIs) corresponding to the query prefix;
  acquiring vector representation of spatial-temporal features of each candidate POI;
  inputting the vector representation of the spatial-temporal features of each candidate POI into a pre-trained ranking model, so as to obtain a score of each candidate POI; and
  determining query completion suggestions recommended to the user according to the scores of respective candidate POIs;
  wherein the spatial-temporal features comprise at least one of a query time feature and a distance feature between each candidate POI and the user.

2. The method according to claim 1, wherein the vector representation of the query time feature of each candidate POI is determined by:

  mapping the condition that the current time falls into M preset time intervals to an M-dimensional vector space, so as to obtain the vector representation of the query time feature corresponding to the candidate POI, M being a positive integer greater than 1; or
  inquiring temporal popularity distribution of the category of the candidate POI according to the current time, and mapping the inquired popularity condition of the current time to an M-dimensional vector space, so as to obtain the vector representation of the query time feature of the candidate POI; the temporal popularity distribution of each POI category being predetermined by:
  counting the times that the inquired or clicked time of each POI category falls into the M preset time intervals respectively, so as to obtain the temporal popularity distribution corresponding to each POI category.

3. The method according to claim 2, wherein the vector representation of the distance feature between each candidate POI and the user is determined by:

  determining the distance between the candidate POI and the user, and mapping the condition that the distance falls into N preset distance intervals to an N-dimensional vector space, so as to obtain the vector representation of the distance feature corresponding to the candidate POI, N being a positive integer greater than 1; or
  inquiring spatial popularity distribution of the category of the candidate POI according to the distance between the candidate POI and the user, and mapping the inquired popularity condition of the distance to an N-dimensional vector space, so as to obtain the vector representation of the distance feature of the candidate POI; the spatial popularity distribution of each POI category is predetermined by:
  counting the times that the distance between each POI category and the user when the POI category is inquired or clicked falls into the preset N distance intervals respectively, so as to obtain the spatial popularity distribution corresponding to each POI category.

4. The method according to claim 1, wherein vector representation of attribute features of the user and vector representation of popularity features of each candidate POI are further used when each candidate POI is scored by the ranking model.

5. A method for training a ranking model for query auto-completion, comprising:

acquiring sample data from a POI query log, wherein the sample data comprises a query prefix input when a user selects a POI from query completion suggestions, POIs in the query completion suggestions corresponding to the query prefix and the POI selected by the user in the query completion suggestions; and

training a neural network model by taking vector representation of spatial-temporal features of the POI selected by the user in the query completion suggestions as a positive example and vector representation of spatial-temporal features of the POIs not selected by the user as negative examples, so as to obtain the ranking model, with a training target of maximizing the difference between the scores of the positive and negative example POIs by the neural network model;

wherein the spatial-temporal features comprise at least one of a query time feature and a distance feature between each POI and the user.

6. The method according to claim 5, wherein the vector representation of the query time feature of each POI in the query completion suggestions is determined by:

mapping the condition that the time when the user selects the POI from the query completion suggestions falls into M preset time intervals to an M-dimensional vector space, so as to obtain the vector representation of the query time feature corresponding to each POI, M being a positive integer greater than 1; or

determining the time when the user selects the POI from the query completion suggestions, inquiring temporal popularity distribution of the category of each POI according to the time, and mapping the inquired popularity condition of the time to an M-dimensional vector space, so as to obtain the vector representation of the query time feature corresponding to each POI; the temporal popularity distribution of each POI category is predetermined by:

counting the times that the inquired or clicked time of each POI category falls into the M preset time intervals respectively, so as to obtain the temporal popularity distribution corresponding to each POI category.

7. The method according to claim 5, wherein the vector representation of the distance feature of each POI in the query completion suggestions and the user is determined by:

mapping the condition that the distance between the POI in the query completion suggestions and the user falls into N preset distance intervals to an N-dimensional vector space, so as to obtain the vector representation of the distance feature corresponding to the POI, N being a positive integer greater than 1; or

inquiring spatial popularity distribution of the category of the POI according to the distance between the POI in the query completion suggestions and the user, and mapping the inquired popularity condition of the distance to an N-dimensional vector space, so as to obtain the vector representation of the distance feature corresponding to the POI; the spatial popularity distribution of each POI category is predetermined by:

counting the times that the distance between each POI category and the user when the POI category is inquired or clicked falls into the preset N distance intervals respectively, so as to obtain the spatial popularity distribution corresponding to each POI category.

8. The method according to claim 5, wherein the positive example further comprises vector representation of attribute features of the user and vector representation of popularity features of the POI selected by the user; and

the negative example further comprises the vector representation of the attribute features of the user and vector representation of popularity features of the POIs not selected by the user.

9. A query auto-completion apparatus, comprising:

a first acquiring unit configured to acquire a query prefix input by a user currently, and determine candidate Points of Interest (POIs) corresponding to the query prefix;

a second acquiring unit configured to acquire vector representation of spatial-temporal features of each candidate POI;

a scoring unit configured to input the vector representation of the spatial-temporal features of each candidate POI into a pre-trained ranking model, so as to obtain a score of each candidate POI; and

a query completion unit configured to determine query completion suggestions recommended to the user according to the scores of respective candidate POIs;

wherein the spatial-temporal features comprise at least one of a query time feature and a distance feature between each candidate POI and the user.

10. The apparatus according to claim 9, wherein the second acquiring unit is specifically configured to map the condition that the current time falls into M preset time intervals to an M-dimensional vector space, so as to obtain the vector representation of the query time feature corresponding to the candidate POI, M being a positive integer greater than 1; or

inquire temporal popularity distribution of the category of the candidate POI according to the current time, and map the inquired popularity condition of the current time to an M-dimensional vector space, so as to obtain the vector representation of the query time feature of the candidate POI; the temporal popularity distribution of each POI category being predetermined by:

counting the times that the inquired or clicked time of each POI category falls into the M preset time intervals respectively, so as to obtain the temporal popularity distribution corresponding to each POI category.

11. The apparatus according to claim 9, wherein the second acquiring unit is specifically configured to determine the distance between the candidate POI and the user, and map the condition that the distance falls into N preset distance intervals to an N-dimensional vector space, so as to obtain the vector representation of the distance feature corresponding to the candidate POI, N being a positive integer greater than 1; or

inquire spatial popularity distribution of the category of the candidate POI according to the distance between the candidate POI and the user, and map the inquired popularity condition of the distance to an N-dimensional vector space, so as to obtain the vector representation of the distance feature of the candidate POI; the spatial popularity distribution of each POI category is predetermined by:

counting the times that the distance between each POI category and the user when the POI category is inquired or clicked falls into the preset N distance intervals respectively, so as to obtain the spatial popularity distribution corresponding to each POI category.

12. The apparatus according to claim 9, wherein the scoring unit is further configured to input vector representation of attribute features of the user and vector representation of popularity features of each candidate POI into the ranking model, such that each candidate POI is scored by the ranking model.

13. An apparatus for building a ranking model for query auto-completion, comprising:

a first acquiring unit configured to acquire sample data from a POI query log, wherein the sample data comprises a query prefix input when a user selects a POI from query completion suggestions, POIs in the query completion suggestions corresponding to the query prefix and the POI selected by the user in the query completion suggestions;

a second acquiring unit configured to acquire vector representation of spatial-temporal features of each POI in the query completion suggestions; and

a model training unit configured to train a neural network model by taking vector representation of spatial-temporal features of the POI selected by the user in the query completion suggestions as a positive example and vector representation of spatial-temporal features of the POIs not selected by the user as negative examples, so as to obtain the ranking model, with a training target of maximizing the difference between the scores of the positive and negative example POIs by the neural network model;

wherein the spatial-temporal features comprise at least one of a query time feature and a distance feature between each POI and the user.

14. The apparatus according to claim 13, where the second acquiring unit is specifically configured to map the condition that the distance between the POI in the query completion suggestions and the user falls into N preset distance intervals to an N-dimensional vector space, so as to obtain the vector representation of the distance feature corresponding to the POI, N being a positive integer greater than 1; or

inquire spatial popularity distribution of the category of the POI according to the distance between the POI in the query completion suggestions and the user, and map the inquired popularity condition of the distance to an N-dimensional vector space, so as to obtain the vector representation of the distance feature corresponding to the POI; the spatial popularity distribution of each POI category is predetermined by:

counting the times that the distance between each POI category and the user when the POI category is inquired or clicked falls into the preset N distance intervals respectively, so as to obtain the spatial popularity distribution corresponding to each POI category.

15. The apparatus according to claim 13, where the second acquiring unit is specifically configured to map the condition that the time when the user selects the POI from the query completion suggestions falls into M preset time intervals to an M-dimensional vector space, so as to obtain the vector representation of the query time feature corresponding to each POI, M being a positive integer greater than 1; or

determine the time when the user selects the POI from the query completion suggestions, inquire temporal popularity distribution of the category of each POI according to the time, and map the inquired popularity condition of the time to an M-dimensional vector space, so as to obtain the vector representation of the query time feature corresponding to each POI; the temporal popularity distribution of each POI category is predetermined by:

counting the times that the inquired or clicked time of each POI category falls into the M preset time intervals respectively, so as to obtain the temporal popularity distribution corresponding to each POI category.

16. The apparatus according to claim 13, wherein the positive example further comprises vector representation of attribute features of the user and vector representation of popularity features of the POI selected by the user; and the negative example further comprises the vector representation of the attribute features of the user and vector representation of popularity features of the POIs not selected by the user.

17. An electronic device, comprising:

at least one processor;
a memory connected with the at least one processor communicatively;
wherein the memory stores instructions executable by the at least one processor to enable the at least one processor to perform the method according to any one of claims 1 to 8.

18. A non-transitory computer readable storage medium with computer instructions stored thereon, wherein the computer instructions are used for causing a computer to perform the method according to any one of claims 1 to 8.

Fig.1

Fig.2

301

Acquire a query prefix input by a user currently, and determine candidate POIs corresponding to the query prefix

302

Acquire vector representation of spatial-temporal features of each candidate POI

303

Input the vector representation of the spatial-temporal features of each candidate POI into a pre-trained ranking model, so as to obtain a score of each candidate POI

304

Determine query completion suggestions recommended to the user according to the scores of respective candidate POIs

Fig.3

Score of
candidate POI

| Ranking model |

$V$

| Splicing |

$V_t$     $V_s$     $V_{pop}$         $U_d$

| Encoding | | Encoding | | Encoding |     | Encoding |

Current
time

Distance between
candidate POI
and user

Popularity of
candidate POI

User attribute
information

Fig.4

501

Acquire sample data from a POI query log, wherein sample data includes a query prefix input when a user selects a POI from query completion suggestions, POIs in query completion suggestions corresponding to query prefix and the POI selected by user in query completion suggestions

502

Acquire vector representation of spatial-temporal features of each POI in query completion suggestions

503

Train a neural network model by taking vector representation of spatial-temporal features of POI selected by user in query completion suggestions as a positive example and vector representation of spatial-temporal features of POIs not selected by user as negative examples, so as to obtain ranking model

Fig.5

Query
prefix

01

First acquiring unit

02

Second acquiring unit

03

Scoring unit ──────► Ranking model

04

Query completion unit ◄──────

Query completion
suggestions

Fig.6

POI query log

First acquiring unit — 11

Second acquiring unit — 12

Model training unit — 13

Ranking model

Fig.7

Processor — 801

Input apparatus — 803

Bus

Program

Memory — 802

Output apparatus — 804

Fig.8

## INTERNATIONAL SEARCH REPORT

| International application No. |
| --- |
| **PCT/CN2020/117560** |

**A.    CLASSIFICATION OF SUBJECT MATTER**

G06F 16/9537(2019.01)i;  G06F 16/953(2019.01)i;  G06F 16/9535(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI: 查询, 自动, 补全, 兴趣点, 候选, 时间, 空间, 向量, 距离, 训练, 模型, 排序, 评分, 统计, 次数, automatic, query, autocomplete, POI, candidate, spatio-temporal, vector, time, distance, train+, sorting, ranking, model, score

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 104462369 A (SHENYANG MXNAVI TECHNOLOGY CO., LTD.) 25 March 2015 (2015-03-25)<br>    description, paragraphs 39-69 | 1-18 |
| Y | CN 107862004 A (IFLYTEK CO., LTD.) 30 March 2018 (2018-03-30)<br>    description, paragraphs 86-154 | 1-18 |
| Y | CN 103914536 A (BEIJING BAIDU NETCOM SCIENCE AND TECHNOLOGY CO., LTD.) 09 July 2014 (2014-07-09)<br>    description, paragraphs 19-48 | 2-3, 6-7, 10-11, 14-15 |
| PX | CN 111241427 A (BAIDU ONLINE NETWORK TECHNOLOGY (BEIJING) CO., LTD.) 05 June 2020 (2020-06-05)<br>    claims 1-18 | 1-18 |
| A | US 2013226921 A1 (ELIASSAF, Ofer) 29 August 2013 (2013-08-29)<br>    entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 December 2020** | **23 December 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/117560**

| Patent document cited in search report | | | Publication date (day/month/year) | Patent family member(s) | Publication date (day/month/year) |
|---|---|---|---|---|---|
| CN | 104462369 | A | 25 March 2015 | None | |
| CN | 107862004 | A | 30 March 2018 | None | |
| CN | 103914536 | A | 09 July 2014 | None | |
| CN | 111241427 | A | 05 June 2020 | None | |
| US | 2013226921 | A1 | 29 August 2013 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010011220 X